# EUROPÄISCHE PATENTSCHRIFT

(11) **EP 1 607 134 B1**
(45) Veröffentlichungstag und Bekanntmachung des Hinweises auf die Patenterteilung: **18.11.2009**
(21) Anmeldenummer: 05010432.2
(22) Anmeldetag: 13.05.2005
(51) Int. Cl.: B01J 20/26, B01J 20/28, B01J 20/281, B01D 15/08

(54) **Sorbierender Sammler auf Polyorganosiloxanbasis**
Polyorganosiloxane-based sorbent trap
Sorbent de piégeage à base de polyorganosiloxane

(30) Priorität: 27.05.2004 DE 102004026485
(43) Veröffentlichungstag der Anmeldung: 21.12.2005
(73) Patentinhaber: Gerstel Systemtechnik GmbH & Co. KG, 45473 Mülheim (DE)
(72) Erfinder: Sandra, Patrik, Prof. Dr., 8510 Kortrijk-Marke (BE); David, Frank, Dr., 8310 Brügge (BE)
(74) Vertreter: Sparing Röhl Henseler Patentanwälte European Patent Attorneys

(56) Entgegenhaltungen:
- WO-A-00/46281
- WO-A-99/22861
- WO-A-2004/037387
- CH-A- 507 724
- DE-A1- 19 726 164
- PATENT ABSTRACTS OF JAPAN Bd. 2003, Nr. 12, 5. Dezember 2003 (2003-12-05) -& JP 2003 268064 A (SAN EAST RESEARCH:KK), 25. September 2003 (2003-09-25)

## Beschreibung

Die Erfindung betrifft einen Sammler zur Mikroextraktion von zu untersuchenden Substanzen nach dem Oberbegriff des Anspruchs 1.

Ein derartiger Sammler ist bekannt aus WO 2004/037387 A2, um insbesondere gasförmige, organische und anorganische Verunreinigungen aus einem Fluidstrom zu entfernen. Dieser Sammler umfasst ein Filtermedium mit einem absorptiven System umfassend wenigstens ein Polymer mit sauren oder basischen Gruppen entlang der Polymerkette und/oder eine Polymermatrix, die im Wesentlichen frei von polymeren Vernetzungen ist. Das absorptive System kann dabei auf einem Träger aufgebracht sein, um verbesserte strukturelle Eigenschaften, beispielsweise die eines offenporigen Schaums, zu erhalten. Darüber hinaus kann das Filtermedium aus zwei Schichten bestehen, die in einem Gehäuse in Fließrichtung des Fluids hintereinander als Füllung des Gehäuses angeordnet sind. Eine Schicht wird somit von der anderen Schicht einseitig teilweise nach außen hin abgedeckt. Dabei ist zwischen den Schichten ein Spalt vorgesehen, damit sich die Materialien nicht berühren, um so einen Protonentransfer zu verhindern.

In der Chromatographie, insbesondere in der Gaschromatographie, sind Sammler zur Mikroextraktion und späteren Analyse von zu untersuchenden Substanzen, beispielsweise in Form von wechselbaren, mittels Trägergas durchströmbaren, rohrförmigen Probenbehältern, sogenannten Linern, bekannt, die mit einer Schicht oder Füllung aus einem sorbierenden und/oder adsorbierenden Material zur Aufnahme der zu untersuchenden Substanzen versehen sind. Hierbei kann es sich um Sammler handeln, die extern zu untersuchende Substanzen aus Flüssigkeiten und/oder Gasen aufnehmen und anreichern, um dann in ein chromatographisches System eingebracht zu werden, wo die Substanzen (gegebenenfalls thermo-)desorbiert und analysiert werden. Bei den Sammlern kann es sich aber auch um im chromatographischen System befindliche Adsorptionsfallen, sogenannte "traps" oder "cryotraps", handeln. Die Sammler werden zur Desorption um- oder durchströmt.

Es ist bekannt, Sammler in Form von Röhrchen auszubilden, die eine Innenbeschichtung aus dem sorbierenden und/oder adsorbierenden Material aufweisen. Diese Innenbeschichtung besitzt jedoch eine relativ geringe Aufnahmekapazität.

Letztere wird verbessert, indem eine körnige Füllung aus dem sorbierenden und/oder adsorbierenden Material vorgesehen wird. Eine derartige Füllung bietet, wenn sie eine Absorption ermöglicht, wie es bei Polyorganosiloxanen der Fall ist, eine genügend große bzw. eher im Verhältnis zur notwendigen zu große Masse. Allerdings ist es schwierig, das Füllmaterial mit einheitlicher Teilchengröße herzustellen. Dies führt in den Sammlern zu unterschiedlich großen Strömungswiderständen für das Durchleiten von Fluiden, die zumindest bei der Desorption benötigt werden, und gegebenenfalls sogar zu Verstopfungen. Die relativ große Masse beeinträchtigt allgemein das Chromatogramm infolge eines durch entsprechendes "Bluten" erzeugten, starken Hintergrundes.

Aufgabe der Erfindung ist es, einen sorbierenden Sammler zur Mikroextraktion zu schaffen, der eine praktisch ungestärk quantitative Analyse ermöglicht.

Diese Aufgabe wird durch die Merkmale des Anspruchs 1 gelöst.

Die offenporige Schaumstruktur als Sammler bietet einerseits eine sehr große absorbierende Oberfläche, die zu einem schnellen aktiven Stoffaustausch bei einem Durchleiten von einem mit zu untersuchenden Substanzen beladenem Fluid oder von einem Trägerfluid führt und einen akzeptablen, d.h. nicht übermäßigen Druckabfall bewirkt, so daß gegenüber entsprechendem, teilchenförmigem Füllmaterial die Absorptionsgüte wesentlich gesteigert werden kann, zumal sich ein derartiger Schaum in seiner Struktur und seinem spezifischen Gewicht sehr gezielt herstellen läßt. Zudem kann die Gleichgewichtsreaktion des Schaummaterials mit einzelnen Substanzen, wenn sie nicht schon bekannt ist, leicht bestimmt werden. Abgesehen davon ist ein derartiges Schaummaterial in einem sehr weiten Temperaturbereich von etwa -70°C bis etwa + 400°C einsetzbar und trägt wegen seiner relativ geringen Masse selbst nur geringfügig durch "Ausbluten" zum Chromatogramm bei, d.h. daß nur eine entsprechend geringe Ausblendung des Eigenchromatogramms des Schaummaterials, das zudem berechenbar ist, erforderlich ist. Die Anreicherung von zu untersuchenden Substanzen ist im Vergleich zu teilchenförmigem Sammlermaterial besser reproduzierbar. Aufgrund des großen Temperatureinsatzbereichs ist das Sammlermaterial insbesondere in chromatographischen Anreicherungsfallen, und zwar auch in cryotraps, aber auch in Sammlern für Kaltaufgabesysteme bzw. Thermodesorptionssysteme von Chromatographen einsetzbar.

Die Porosität des Sammlermaterials ist zweckmäßigerweise derart, daß sich bei Durchfluß eines Gases in einer in der Gaschromatographie üblichen Menge von 30 ml/min ein Druckabfall < 1 bar, insbesondere < 0,8 bar ergibt.

Das Sammlermaterial läßt sich leicht in irgendeine Form bringen und ist zweckmäßigerweise weich, so daß es ohne weiteres in eine Hülle etwa in Form eines Röhrchens oder eines Schlauchs einbringbar und darin aufgrund der Offenporigkeit gas- oder flüssigkeitsdurchströmbar ist. Das Sammlermaterial hat vorzugsweise ein spezifisches Gewicht von etwa 0,15 bis 0, 25 g/cm³ und im allgemeinen auch ein geringes Wasserabsorptionsvermögen < 5%.

Das Sammlermaterial kann mit einem Füllstoff, etwa einem Pigment, gefüllt und ferner mit wenigstens einer Komponente dotiert sein, die mit zu untersuchenden Substanzen chemisch reagiert, wobei Reaktionsprodukte sorbiert bzw. adsorbiert werden, wenn nur die Reaktionsprodukte, nicht aber deren Ausgangssubstanzen chromatographisch nachweisbar sind. Ein Beispiel für die Anwendung hiervon stellt die Extraktion von Aldehyden und Ketonen auf einem mit Pentafluorobenzylhydroxylamin imprägnierten Material dar, wobei die Carbonylfunktionen der interessierenden Verbindungen ein typisches flüchtiges Reaktionsprodukt bilden, das sorbiert, thermisch desorbiert und chromatographisch analysiert werden kann. Andere Beispiele umfassen die Derivatisierung von Phenolen und Aminen durch Acylisierung, die Derivatisierung von Thiolen und die Reaktion von Ethylenoxid mit Bromwasserstoff. So kann die abdeckende Schicht mehrschichtig aufgebaut sein, wobei eine Lage wenigstens eine chemisch reagierende Komponente enthält.

Der Sammler, etwa in Form eines Liners, liefert einerseits ein vergrößertes Aufnahmespektrum für zu untersuchende Substanzen und andererseits wird eine quantitative Analyse über das gesamte Aufnahmespektrum ermöglicht, da das offenporige Sammlermaterial nicht mit dem Außenraum in Kontakt steht und daher auch keine aufgenommenen Substanzen wieder in den Außenraum abgibt. Diese können vielmehr in einem Chromatographen etwa über Thermodesorption zusammen mit den von dem Material der abdeckenden Schicht aufgenommenen Substanzen desorbiert werden, so daß eine praktisch ungestörte quantitative Analyse ermöglicht wird. Die Kapselung gewährleistet einen luftdichten Abschluß, so daß von dem offenporigen Sammlermaterial aufgenommene Substanzen nicht wieder nach außen abgegeben werden können.

Insbesondere ist die abdeckende Schicht hydrophob und/oder lipophob, so daß die Füllung infolge der Kapselung nicht mit Wasser bzw. Ölen oder Fetten in Berührung gelangt.

Die abdeckende Schicht kann auch als selektive, semipermeable Membran wirkend ausgebildet sein. Außerdem kann die abdeckende Schicht auch aus unterschiedlichen, sorbierenden und/oder adsorbierenden Materialien in Mischung oder mehrschichtig zu einander angeordnet gebildet sein.

Als Material für die abdeckende Schicht eignet sich beispielsweise Polyethyelenglykol, Octadecyltrichlorsilan, Polymethylvinylchlorsilan, Polyacrylat, LDPE (low density Polyethylen) oder Polyimid.

Die unterschiedliche Selektivität der Materialien für die Füllung und die abdeckende Schicht bezieht sich auf die Flüchtigkeit und gegenbenenfalls auf die Polarität der zu untersuchenden Substanzen . Dementsprechend sind diese Materialien auszuwählen.

Weitere Ausgestaltungen der Erfindung sind der nachfolgenden Beschreibung und den Unteransprüchen zu entnehmen.

Die Erfindung wird nachstehend im Zusammenhang mit in den beigefügten Abbildungen dargestellten Ausführungsbeispielen näher erläutert.

Fig. 1 und 2 zeigen in Draufsicht und im Schnitt eine Ausführungsform eines Sammlers.

Fig. 3 bis 5 zeigen weitere Ausführungsformen von Sammlern.

Fig. 6 bis 8 zeigen im Schnitt drei Ausführungsformen eines Liners.

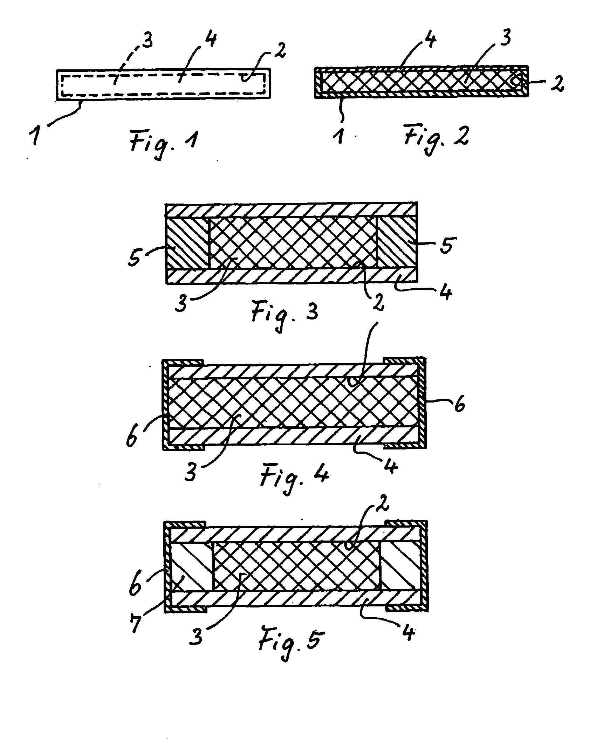

Bei der in den Fig. 1 und 2 dargestellten Ausführungsform eines Sammlers umfaßt dieser einen trogartigen Behälter 1 beispielsweise aus Glas, Metall oder Plastikmaterial, der einen Aufnahmeraum 2 besitzt, der mit einer Füllung 3 gefüllt ist, die in dem Behälter 1 durch eine dessen Aufnahmeraum 2 nach außen abdeckende und dicht verschließende Schicht 4 gekapselt ist. Die Schicht 4 besteht aus ersten sorbierenden und/oderadsorbierenden Material und die Füllung 3 aus einem zweiten sorbierenden und/oder adsorbierenden Sammlermaterial auf Polyorganosiloxanbasis mit offenporiger Schaumstruktur und einer anderen Selektivität als das erste Material.

Auch wenn der dargestellte Behälter 1 im wesentlichen stabförmig ist, kann er in anderer Form, beispielsweise in Draufsicht rund sein. DerQuerschnitt senkrecht zur Ebene von Fig. 2 kann ebenfalls unterschiedlich sein, beispielsweise rechteckig, halbrund, teiloval od.dgl.

Ferner kann auch in Umkehrung eine Platte aus einem Trägermaterial anstelle der Schicht 4 und der Teil, der in der Ausführungsform von Fig. 1 und 2 den Behälter 1 bildet, aus dem ersten Material sein und damit die die Füllung 3 in einem größeren Bereich abdeckende Schicht 4 bilden. Die Platte kann aus magnetischen oder magnetisierbarem Material bestehen, so daß der Sammler als Magnetrührer verwendbar oder an einer magnetischen Halterung zum Sammeln anheftbar ist. - Hierzu kann aber auch ein beispielsweise stabförmiger Magnet zusätzlich zu der Füllung in den Aufnahmeraum 2 eingelegt oder außen auf den Sammler aufgeklebt sein.

Bei den in den Fig. 3 bis 5 dargestellten Ausführungsformen bildet die Schicht 4 einen Schlauch, dessen Innenraum den Aufnahmeraum 2 für die Füllung 3 bildet.

Bei Fig. 3 ist der Schlauch endseitig jeweils durch einen Stopfen 5 dicht verschlossen. Die Stopfen 5 sind beispielsweise eingeklebt. Die Stopfen 5 können aus demselben Material wie der Schlauch oder aber aus einem anderen Material wie Glas, Metall oder Kunststoff bestehen. Bei Verwendung von Stopfen 5 aus magnetischem oder magnetisierbarem Material kann der Sammler als Magnetrührer verwendet oder an einer magnetischen Halterung angeheftet werden.

Bei Fig. 4 ist der Schlauch endseitig jeweils durch eine Kappe 6 dicht verschlossen. Die Kappen 6 können aus demselben Material wie der Schlauch oder aber aus einem anderen Material wie Glas, Metall oder Kunststoff bestehen. Bei Verwendung von Kappen 6 aus magnetischem oder magnetisierbarem Material kann der Sammler als Magnetrührer verwendet oder an einer magnetischen Halterung angeheftet werden.

Bei der in Fig. 5 dargestellten Ausführungsform sind endseitig benachbart zu den Kappen 6 zusätzlich Einsätze 7 aus magnetischem oder magnetisierbarem Material in den Schlauch eingefügt, um den Sammler als Magnetrührer verwenden oder an einer magnetischen Halterung anheften zu können. - Wenn Stopfen 5 zum Verschließen des Schlauchs verwendet werden, können ebenfalls Einsätze 7 in letzterem vorzugsweise benachbart zu den Stopfen 5 angeordnet werden.

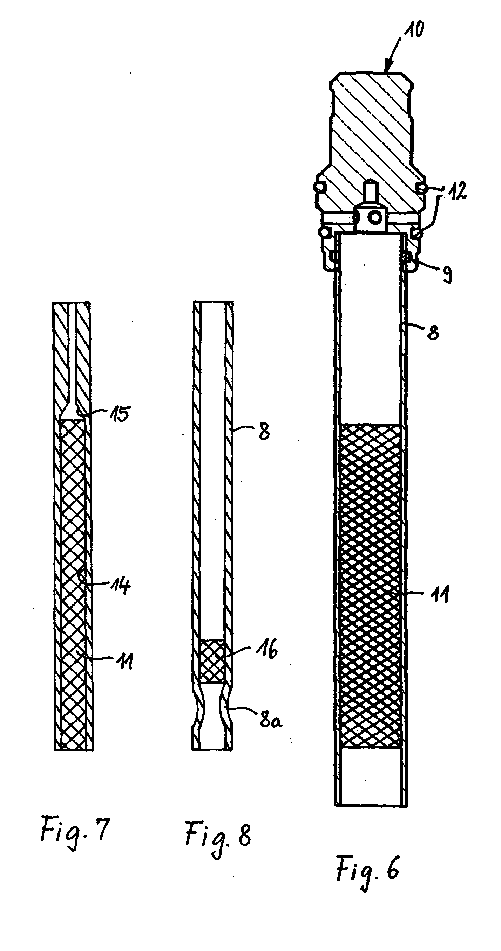

Die in Fig. 6 dargestellte Ausführungsform eines Liners umfaßt ein Rohr 8, das aus Glas, Metall oder Plastikmaterial bestehen kann und über einen O-Ring 9 von einem Transportkopf 10 gehalten wird. In dem Rohr 8 befindet sich eine Packung 11 aus offenporigem Polyorganosiloxanschaum. Der Transportkopf besitzt Dichtungen Transportkopf besitzt Dichtungen 12, über die er in eine Aufgabevorrichtung eines Gaschromatographen abdichtend einsetzbar ist, wobei zwischen den Dichtungen 12 Bohrungen 13 einer Trägergaszufuhr zum Inneren des Liners münden.

Gegebenenfalls kann der Liner (nicht dargestellte) Haltemittel aufweisen, die die Packung 11 gegen die vom durchströmenden Trägergas auf die Packung 11 ausgeübte Kraft im Rohr 8 zurückhalten. Hierbei kann es sich beispielsweise um einen Einstich, d.h. eine Verengung 8a am Austrittsende des Rohrs 8 oder um eine am Austrittsende des Rohrs 8 eingesetzte Glasfritte od.dgl. handeln. Jedoch kann die Packung 11 auch durch die Spannkraft des beim Einführen in das Rohr 8 etwas zusammengedrückten Schaums gehalten werden, ohne ein zusätzliches Haltemittel vorzusehen.

Bei der in Fig. 7 dargestellten Ausführungsform ist der außenseitig kreiszylindrische Liner mit einer durchgehenden Bohrung 14 versehen, die durch eine Schulter 15 gestuft ist, wobei die Packung 11 in dem Bereich der Bohrung 14 mit größerem Durchmesser untergebracht ist.

Die Packung 11 kann auch so ausgebildet sein, daß der von der Schulter 15 begrenzte Raum ebenfalls hiervon ausgefüllt ist. Dies hat den Vorteil, daß in Richtung zur Schulter 15, d.h. zu dem Bereich der Bohrung 14 mit kleinerem Durchmesser hin, Wasser durchziehbar, beispielsweise pumpbar ist, ohne daß ein Totraum bis zur Schulter 15 vorhanden ist, indem eine Tropfenbildung stattfinden kann. Die Packung kann anschließend bei niedriger Temperatur getrocknet werden, wonach erst ein Hochheizen zum Desorbieren der zu untersuchenden Substanzen unter Trägergashindurchführung in umgekehrter Richtung vorgenommen wird.

Auch bei der Ausführungsform von Fig. 7 können natürlich Haltemittel zum Zurückhalten der Packung 11 vorgesehen sein.

Ferner ist es bei bestimmten Anwendungen, bei denen aufzugebende, flüssige Proben Feststoffpartikel enthalten, zweckmäßig, die Proben etwa mittels einer Spritze über einen Liner aufzugeben, der, wie in Fig. 8 dargestellt, einen Pfropfen 16 aus Polyorganosiloxanschaum enthält, derzwarfürdie Probenflüssigkeit durchlässig ist, aber Feststoffpartikel zurückhält. Der Pfropfen 16 dient dann als Phasentrennungsfilter. Gegenüber einem Filtern der Proben vor der Probenaufgabe in das Analysesystem hat dies den Vorteil, daß in der Probe enthaltende Stoffe, die beim Filtern entfernt würden, obwohl sie wenigstens teilweise auch von dem Propfen 16 zurückgehalten werden, sich jedoch anschließend mit schonender Temperatur wieder desorbieren lassen, ebenfalls zwecks Analyse zur Verfügung stehen. Gegebenenfalls läßt sich bei entsprechender Masse des Pfropfens 16 aus Polyorganosiloxanschaum auch eine gezielte Anreicherung bestimmter Stoffe aus der Probe vornehmen. Der Pfropfen 16 stellt somit in diesen Anwendungsfällen ein hoch inertes Filter dar, da hierdurch die Analyseergebnisse praktisch nicht verfälscht werden.

Das erfindungsgemäße Sammlermaterial eignet sich auch dazu, aus mit flüssigem Wasser etwa über eine Spritze oder Pumpe injiziert zu werden, um organische Stoffe daraus zwecks späterer Analyse aufzunehmen und anzureichern, ohne daß eine merkliche Deaktivierung stattfindet.

Außerdem ist das Sammlermaterial für eine VOC(volatile organic component)-Trap etwa zwischen zwei Chromatographiesäulen verwendbar.

## Patentansprüche

1. Sammler zur Mikroextraktion und Analyse von zu untersuchenden Substanzen, umfassend eine Schicht (4) mit einem ersten sorbierenden und/oder adsorbierenden Material, und einem Aufnahmeraum (2) mit einer Füllung (3) aus einem zweiten sorbierenden und/oder adsorbierenden Sammlermaterial auf Polyorganosiloxanbasis mit einer offenporigen Schaumstruktur und mit einer anderen Selektivität als das erste Material, wobei die Schicht (4) für die von dem zweiten Material sorbierbaren und/oder adsorbierbaren Substanzen durchlässig ist und die Schicht (4) die Füllung (3) zumindest teilweise nach außen hin abdeckt, **dadurch gekennzeichnet, dass** die Füllung (3) in dem Aufnahmeraum (2) gekapselt ist, wobei die Kapselung einen luftdichten Abschluss gewährleistet, und diese Füllung (3) eine höhere Selektivität bezüglich leicht flüchtiger Komponenten der zu untersuchenden Substanzen als die abdeckende Schicht (4) aufweist.

2. Sammler nach Anspruch 1, **dadurch gekennzeichnet, dass** die Schicht (4) hydrophob und/oder lipophob ist.

3. Sammler nach einem der Ansprüche 1 oder 2, **dadurch gekennzeichnet, dass** die Materialien der Schicht (4) und der Füllung (3) unterschiedliche Polaritäten aufweisen.

4. Sammler nach einem der Ansprüche 1 bis 3, **dadurch gekennzeichnet, dass** das Verhältnis der für die Füllung (3) und die Schicht (4) verwendeten Masse des ersten und zweiten Materials an den jeweiligen Anwendungsfall angepasst ist.

5. Sammler nach einem der Ansprüche 1 bis 4, **dadurch gekennzeichnet, dass** die Schicht (4) und/oder die Füllung (3) wenigstens eine mit zu untersuchenden Substanzen chemisch reagierende Komponente enthält.

6. Sammler nach einem der Ansprüche 1 bis 5, **dadurch gekennzeichnet, dass** er als Stab ausgebildet ist.

7. Sammler nach Anspruch 6, **dadurch gekennzeichnet, dass** die Schicht (4) einen die Füllung (3) aufnehmenden und endseitig dicht verschlossenen Schlauch bildet.

8. Sammler nach Anspruch 7, **dadurch gekennzeichnet, dass** der Schlauch durch Kappen (6) oder Stopfen (5) verschlossen ist.

9. Sammler nach einem der Ansprüche 6 bis 8, **dadurch gekennzeichnet, dass** er als Magnetrührer ausgebildet ist.

10. Sammler nach Anspruch 9, **dadurch gekennzeichnet, dass** der Stab endseitig mit magnetischem oder magnetisierbarem Material versehen ist.

11. Sammler nach Anspruch 10, **dadurch gekennzeichnet, dass** der Stab als mit der Füllung (3) versehener Schlauch endseitig Kappen (6) oder Stopfen (5) oder Einlagen (7) aus magnetischem oder magnetisierbarem Material versehen ist.

12. Sammler nach einem der Ansprüche 1 bis 11, **dadurch gekennzeichnet, dass** die Schicht (4) mit einem Material aus der Gruppe umfassend Polyethylenglykol, Octadecyltrichlorsilan, Polymethylvinylchlorsilan, LDPE (low density Polyethylen) und Polyimid als erstem sorbierenden Material gebildet ist.

13. Sammler nach einem der Ansprüche 1 bis 12, **dadurch gekennzeichnet, dass** die Schicht (4) eine für die zu untersuchenden Substanzen selektive Membran bildet.

14. Sammler nach Anspruch 1, **dadurch gekennzeichnet, dass** er als rohrförmiger, eine Packung (11) aus dem Sammlermaterial enthaltender, gasdurchströmbarer Liner ausgebildet ist.

15. Sammler nach Anspruch 14, **dadurch gekennzeichnet, dass** die Packung (11) in einem Bereich mit größerem Durchmesser einer gestuften Bohrung (14) angeordnet ist.

16. Sammler nach Anspruch 15, **dadurch gekennzeichnet, dass** die gestufte Bohrung (14) einen von einer Schulter (15) gebildeten konischen Übergangsbereich zwischen den Bereichen unterschiedlichen Durchmessers aufweist.

17. Sammler nach Anspruch 16, **dadurch gekennzeichnet, dass** der Übergangsbereich von der Packung (11) mit ausgefüllt ist.

18. Sammler nach einem der Ansprüche 1 bis 17, **dadurch gekennzeichnet, dass** die Schaumstruktur aus Polydimethylsiloxan besteht.

19. Sammler nach einem der Ansprüche 1 bis 18, **dadurch gekennzeichnet, dass** der Schaum derart weich ist, dass das Sammlermaterial ohne weiteres in eine Hülle etwa in Form eines Röhrchens oder eines Schlauches einbringbar ist.

20. Sammler nach einem der Ansprüche 1 bis 19, **dadurch gekennzeichnet, dass** der Schaum ein geringes Wasserabsorptionsverhalten aufweist.

21. Sammler nach einem der Ansprüche 1 bis 20, **dadurch gekennzeichnet, dass** der Schaum ein spezifisches Gewicht von etwa 0,15 bis 0,25 g/cm³ aufweist.

22. Sammler nach einem der Ansprüche 1 bis 21, **dadurch gekennzeichnet, dass** der Schaum mit wenigstens einer Komponente dotiert ist, die mit zu untersuchenden Substanzen chemisch reagiert.

## Claims

1. Collector for microextraction and analysis of substances which are to be investigated, comprising a layer (4) having a first sorbent and/or adsorbent material, and an accommodating space (2) having a filling (3) of a second sorbent and/or adsorbent, polyorganosiloxane-based, collector material having an open-pore foam structure and having a different selectivity from the first material, the layer (4) being permeable to the substances sorbable and/or adsorbable by the second material, and the layer (4) outwardly covering the filling (3) at least partially, **characterised in that** the filling (3) is encapsulated in the accommodating space (2), the encapsulation ensuring an air-tight enclosure, and said filling (3) having a higher selectivity with respect to readily volatile components of the substances to be investigated than the covering layer (4).

2. Collector according to claim 1, **characterised in that** the layer (4) is hydrophobic and/or lipophobic.

3. Collector according to one of claims 1 or 2, **characterised in that** the materials of the layer (4) and of the filling (3) have different polarities.

4. Collector according to one of claims 1 to 3, **characterised in that** the ratio of the weights of the first and second material that are used for the filling (3) and the layer (4) is matched to the particular application.

5. Collector according to one of claims 1 to 4, **characterised in that** the layer (4) and/or the filling (3) comprises at least one component which reacts chemically with substances to be investigated.

6. Collector according to one of claims 1 to 5, **characterised in that** it is in the form of a bar.

7. Collector according to claim 6, **characterised in that** the layer (4) forms a flexible tube which accommodates the filling (3) and which is closed tight at the ends.

8. Collector according to claim 7, **characterised in that** the flexible tube is closed by means of caps (6) or stoppers (5).

9. Collector according to one of claims 6 to 8, **characterised in that** it is in the form of a magnetic stirrer.

10. Collector according to claim 9, **characterised in that** the bar is provided at the ends with magnetic or magnetisable material.

11. Collector according to claim 10, **characterised in that** the bar, in the form of a flexible tube provided with the filling (3), is provided at the ends with caps (6) or stoppers (5) or inserts (7) of magnetic or magnetisable material.

12. Collector according to one of claims 1 to 11, **characterised in that** the layer (4) is formed using, as first sorbent material, a material from the group comprising polyethylene glycol, octadecyltrichlorosilane, polymethylvinylchlorosilane, LDPE (low density polyethylene) and polyimide.

13. Collector according to one of claims 1 to 12, **characterised in that** the layer (4) forms a membrane that is selective for the substances to be investigated.

14. Collector according to claim 1, **characterised in that** it is in the form of a tubular liner which contains a packing (11) of the collector material and through which gas can flow.

15. Collector according to claim 14, **characterised in that** the packing (11) is arranged in a larger-diameter region of a stepped bore (14).

16. Collector according to claim 15, **characterised in that** the stepped bore (14) has, between the regions of different diameters, a tapered transition region formed by a shoulder (15).

17. Collector according to claim 16, **characterised in that** the transition region is also filled with the packing (11).

18. Collector according to one of claims 1 to 17, **characterised in that** the foam structure consists of polydimethylsiloxane.

19. Collector according to one of claims 1 to 18, **characterised in that** the foam is of a softness such that the collector material can be readily introduced into a casing, for example in the form of a small tube or flexible tube.

20. Collector according to one of claims 1 to 19, **characterised in that** the foam has a low water-absorption capacity.

21. Collector according to one of claims 1 to 20, **characterised in that** the foam has a specific weight of about 0.15 to 0.25 g/cm³.

22. Collector according to one of claims 1 to 21, **characterised in that** the foam is doped with at least one component which reacts chemically with substances to be investigated.

## Revendications

1. Collecteur pour la microextraction et l'analyse de substances à analyser, comprenant une couche (4) avec un premier matériau sorbant et/ou adsorbant, et un espace de récupération (2) avec un remplissage (3) d'un deuxième matériau collecteur sorbant ou adsorbant à base de polyorganosiloxilane de structure en mousse respirante et d'une sélectivité autre que celle du premier matériau, la couche (4) étant perméable aux substances sorbantes et/ou adsorbantes du deuxième matériau, et la couche (4) recouvrant au moins partiellement le remplissage (3) vers l'extérieur, **caractérisé en ce que** le remplissage est encapsulé dans l'espace de récupération (2), l'encapsulation garantissant une fermeture étanche, et ce remplissage (3) présentant une sélectivité plus haute par rapport aux composants légèrement plus volatils de la substance à analyser que la couche (4) de recouvrement.

2. Collecteur selon la revendication précédente, **caractérisé en ce que** la couche (4) est hydrophobe et/ou lipophobe.

3. Collecteur selon la revendication 1 ou 2, **caractérisé en ce que** les matériaux de la couche (4) et du remplissage (3) présentent des polarités différentes.

4. Collecteur selon l'une des revendications 1 à 3, **caractérisé en ce que** la proportion des masses des premier et deuxième matériaux pour le remplissage (3) et la couche (4) est adapté à chaque scénario d'utilisation respectif.

5. Collecteur selon l'une des revendications 1 à 4, **caractérisé en ce que** la couche (4) et/ou le remplissage (3) contient au moins une substance réagissant chimiquement avec des substances à analyser.

6. Collecteur selon l'une des revendications 1 à 5, **caractérisé en ce qu'**il est agencé en barre.

7. Collecteur selon la revendication 6, **caractérisé en ce que** la couche (4) forme un tuyau récupérant le remplissage (3) et bouché hermétiquement à son extrémité.

8. Collecteur selon la revendication 7, **caractérisé en ce que** le tuyau est bouché par des capuchons (6) ou des bouchons (5).

9. Collecteur selon l'une des revendications 6 à 8, **caractérisé en ce qu'**il est agencé en tant qu'agitateur magnétique.

10. Collecteur selon la revendication 9, **caractérisé en ce que** la barre est équipée à son extrémité d'un matériau magnétique ou magnétisable.

11. Collecteur selon la revendication 10, **caractérisé en ce que** la barre - en tant que tuyau muni du remplissage (3) - est équipée à son extrémité de capuchons (6), bouchons (5), ou de cales (7) en un matériau magnétique ou magnétisable.

12. Collecteur selon l'une des revendications 1 à 11, **caractérisé en ce que** la couche (4) est constituée d'un matériau choisi parmi un groupe comprenant le glycole de polyéthylène, l'octadéclytrichlorsilane, le polyméthylvinylchlorsilane, le LDPE (polyéthylène basse densité) et le polyimide en tant que premier matériau sorbant.

13. Collecteur selon l'une des revendications 1 à 12, **caractérisé en ce que** la couche (4) forme une membrane sélective pour les substances à analyser.

14. Collecteur selon la revendication 1, **caractérisé en ce qu'**il est agencé comme convoyeur en forme de tube permettant l'écoulement de gaz et contenant un bourrage (11) du matériau sorbant.

15. Collecteur selon la revendication 14, **caractérisé en ce que** le bourrage (11) est disposé dans une partie d'un plus gros diamètre d'un perçage échelonné (14).

16. Collecteur selon la revendication 15, **caractérisé en ce que** le perçage échelonné (14) présente une partie de transition conique formée par un épaulement (15) entre les parties de différents diamètres.

17. Collecteur selon la revendication 16, **caractérisé en ce que** la partie de transition est également remplie par le bourrage (11).

18. Collecteur selon l'une des revendications 1 à 17, **caractérisé en ce que** la structure en mousse consiste en du Polydiméthyl-siloxane.

19. Collecteur selon l'une des revendications 1 à 18, **caractérisé en ce que** la mousse est molle de telle sorte que le matériau sorbant peut être enfoncé sans autre dans une gaine essentiellement de la forme d'un petit tube ou d'un tuyau.

20. Collecteur selon l'une des revendications 1 à 19, **caractérisé en ce que** la mousse présente un comportement d'absorption d'eau réduit.

21. Collecteur selon l'une des revendications 1 à 20, **caractérisé en ce que** la mousse a un poids spécifique compris essentiellement entre 0.15 et 0.25g/cm³.

22. Collecteur selon l'une des revendications 1 à 21, **caractérisé en ce que** la mousse est dotée d'au moins un composant qui réagit avec des substances à analyser.
